# EUROPEAN PATENT APPLICATION

(11) **EP 1 818 768 A2**
(43) Date of publication of application: **15.08.2007**
(21) Application number: 06120314.7
(22) Date of filing: 07.09.2006
(51) Int. Cl.: G06F 3/033

(54) **Display controller with a motion sensor on a portable electronic device**

(30) Priority: 19.01.2006 CN 200610001387
(71) Applicant: High Tech Computer Corp., Taoyuan City, Taoyuan Hsien (TW)
(72) Inventor: Wang, John C., Taoyuan Hsien (TW)
(74) Representative: Viering, Jentschura & Partner

(57) **Abstract**

An intuitive display controller on a portable electronic device is provided. The intuitive display controller includes a motion sensor and a processor coupled with the motion sensor. The motion sensor is for detecting at least one acceleration parameter of the electronic device. The processor generates at least one displacement parameter of the portable electronic device by processing the acceleration parameter and adjusts a display page of the portable electronic device according to the displacement parameter.

## Description

### BACKGROUND

### Field of Invention

The present invention relates to a display controller, and more particularly, to an intuitive display controller on a portable electronic device.

### Description of Related Art

Portable electronic devices, such as cellular phones, portable computer, personal digital assistants, video game devices and media players are widely used and popular among the general public recently. Increasing more functions in one portable electronic device is the trend of development of the portable electronic device. For example, in recent years, all eyes are on portable electronic devices with global position system (GPS) function.

Due to the dimension limitation of display devices, users have to adjust the field of view by panning and zooming a display page so as to browse an electronic map built in the portable electronic devices. It is worth noting that the preferable manner of user's adjusting the display page is an omni-directional and variable speed manner that is like the manner of reading a paper map.

In general, conventional input devices, such as push buttons and a joystick can be used to control a portable electronic device. However, it is difficult to browse an electronic map in the omni-directional manner by using these conventional input devices. Pen touch computing is another conventional input device utilized to control portable electronic device. However, users have to use their both hands to operate the touch panel. Besides, it is not easy to browse an electronic map in the variable speed manner by using touch panel.

In these cases, the conventional input devices are unintuitive; in other words, users have to learn their usage methods, which are usually bothersome for users. Accordingly, how to provide an intuitive display controller on a portable electronic device that allows users to adjust a display page in an omni-directional, variable speed, and intuitive manner, in order to efficiently and conveniently control a portable electronic device is an issue of great consequence.

### SUMMARY

In an aspect of the present invention, an intuitive display controller on a portable electronic device is provided. The intuitive display controller allows users to adjust a display page of the portable electronic device in an intuitive manner, which adjusts the display page according to the motion of the portable electronic device, in order to enhance the operating convenience of users.

In an aspect of the present invention, an intuitive display controller on a portable electronic device is provided. The intuitive display controller allows users to adjust the display page of the portable electronic device in an omni-directional and variable speed manner, thus users can view an electronic map just like that they are reading a paper map.

Accordingly, the present invention provides an intuitive display controller on a portable electronic device. The intuitive display controller includes a motion sensor and a processor coupled with the motion sensor. The motion sensor is for detecting at least one acceleration parameter of the electronic device. The processor generates at least one displacement parameter of the portable electronic device by processing the acceleration parameter and adjusts a display page of the portable electronic device according to the displacement parameter.

According to preferred embodiments, the processor generates at least one velocity parameter by processing the acceleration parameter and adjusts the display page in a variable speed manner according to the velocity parameter.

According to preferred embodiments, the motion sensor is a 3-axle accelerometer.

According to preferred embodiments, the acceleration parameter is sum of an X-directional acceleration parameter and a Y-directional acceleration parameter, wherein the display page is adjusted in an omni-directional manner.

According to preferred embodiments, the acceleration parameter is a Z-directional acceleration parameter and the display page is adjusted in a zooming manner.

The present invention also provides a portable electronic device including a body, a display module and an intuitive display controller. The display module and the intuitive display controller are disposed on the body. The intuitive display controller includes a motion sensor and a processor coupled with the motion sensor. The motion sensor is for detecting at least one acceleration parameter of the electronic device. The processor generates at least one displacement parameter of the portable electronic device by processing the acceleration parameter and adjusts a display page of the portable electronic device according to the displacement parameter.

According to preferred embodiments, the portable electronic device is a personal digital assistant, a cellular phone with a global position system function or a portable computer.

According to preferred embodiments, the portable electronic device has a control switch disposed on the body to activate and deactivate the display controller

The present invention also provides a display control method of a portable electronic device. The display control method is implemented in a portable electronic device. The portable electronic device detects at least one acceleration parameter with a motion sensor firstly. Next, the portable electronic device generates at least one displacement parameter by processing the acceleration parameter. Next, the portable electronic device adjusts a display page according to the displacement parameter.

According to preferred embodiments, the display control method includes a step of generating at least one velocity parameter by processing the acceleration parameter and adjusting the display page in a variable speed manner according to the velocity parameter.

It is to be understood that both the foregoing general description and the following detailed description are by examples and are intended to provide further explanations of the invention as claimed.

### BRIEF DESCRIPTION OF THE DRAWINGS

These and other features, aspects and advantages of the invention will become apparent by reference to the following description and accompanying drawings, which are given by way of illustration only, and thus are not limitative of the invention, wherein:
Fig. 1 is a flowchart illustrating a display control method of the present invention;
Fig. 2 illustrates a preferred embodiment of the portable electronic device according to the present invention;
Fig. 3A to Fig. 3C illustrate several display pages according to a preferred embodiment of the present invention; and
Fig. 4A to Fig. 4B illustrate display pages according to another preferred embodiment of the present invention.

### DESCRIPTION OF THE PREFERRED EMBODIMENTS

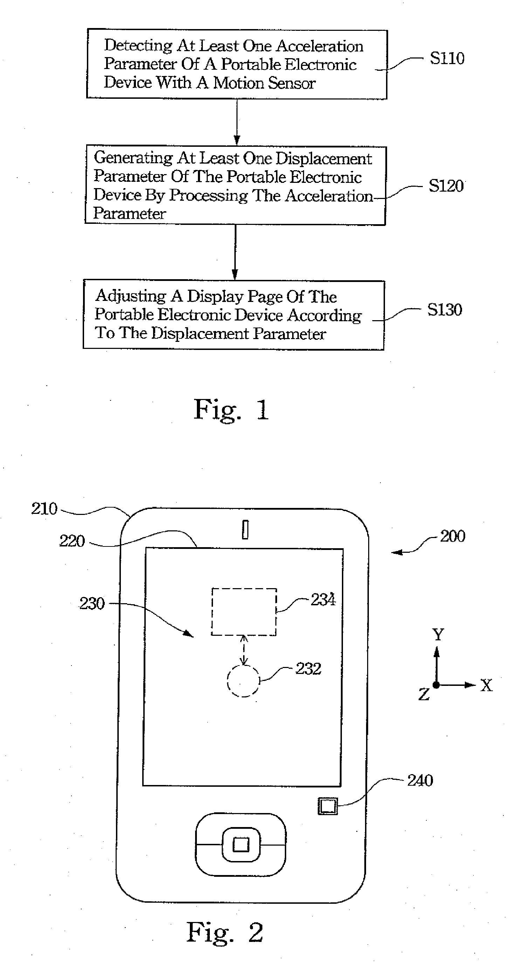

Fig. 1 is a flowchart illustrating a display control method of the present invention. The display control method is implemented in a portable electronic device. In step S110, the portable electronic device detects at least one acceleration parameter with a motion sensor. Next, in step S120, the portable electronic device generates at least one displacement parameter by processing the acceleration parameter. In step S130, the portable electronic device adjusts a display page according to the displacement parameter. It is worth noting that the portable electronic device also can generate at least one velocity parameter by processing the acceleration parameter, and then adjusts the display page in a variable speed manner according to the velocity parameter.

Fig. 2 illustrates a preferred embodiment of the portable electronic device according to the present invention. The portable electronic device 200, which is capable of displaying electronic maps, can be a personal digital assistant (PDA) or a cellular phone with GPS function. The portable electronic device 200 includes a body 210, a display module 220 and a display controller 230. The display module 220 and the display controller 230 are disposed on the body 210. The display controller 230 includes a motion sensor 232 and a processor 234. The motion sensor 232 is for generating at least one acceleration parameter of the portable electronic device 200. The processor 234 coupled to the motion sensor 232 processes the acceleration parameter to generate at least one displacement parameter of the portable electronic device 200 and adjusts a display page according to the displacement parameter. In the same way, the processor 234 can process the acceleration parameter to generate at least one velocity parameter and adjust the display page according to the velocity parameter and/or the displacement parameter. It is worth noting that the display page can be adjusted in the omni-directional manner and/or the variable speed manner.

In accordance with an embodiment of the present invention disclosed herein, the display page of the portable electronic device 200 could be adjusted in an omni-directional and variable speed manner. It should be noted that the present invention is not intended to be limited to the embodiment.

With continued reference to Fig. 2, the motion sensor 232 may be, for example, a 3-axle accelerometer that can generate an X-directional acceleration parameter, a Y-directional acceleration parameter and a Z-directional acceleration parameter of the portable electronic device 200. The X, Y and Z directions are mutually perpendicular. A horizontal acceleration parameter of the portable electronic device 200 can be calculated by summing up of the X-directional acceleration parameter and the Y-directional acceleration parameter. Then, a horizontal displacement parameter of the portable electronic device 200 can be calculated using the horizontal acceleration parameter. For example, by applying a numerical integration procedure, the processor 234 can calculate at least one velocity parameter and at least one displacement parameter of the portable electronic device 200 by processing the acceleration parameter generated by the motion sensor 232. Subsequently, the processor 234 can adjust the display page in the omni-directional and variable speed manner according to the velocity parameter and the displacement parameter.

With continued reference to Fig. 2, the portable electronic device 200 has a control switch 240 disposed on the body 210 to activate and deactivate the display controller 230. For example, the display controller 230 is activated when the control switch 240 is pressed and the portable electronic device 200 is moved. At this moment, the motion sensor 232 detects the acceleration parameter of the portable electronic device 200 and the processor 234 generates the velocity parameter and the displacement parameter of the portable electronic device 200 by processing the acceleration parameter so as to adjust the display page in the omni-directional and variable speed manner. After that, users can release the control switch 240 and move the portable electronic device 200 back to the original position without changing the display page. Thus, users can browse a large electronic map easily and conveniently.

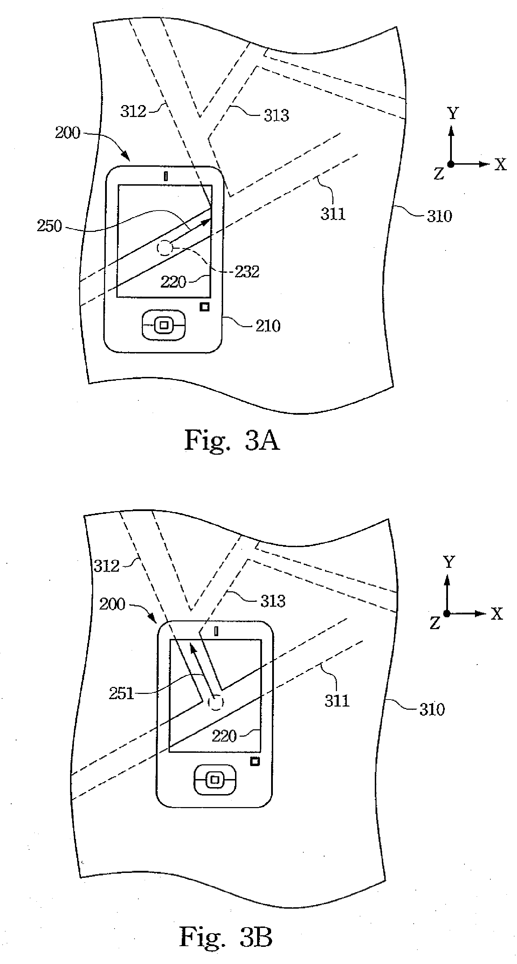

Fig. 3A to Fig. 3C illustrate several display pages according to a preferred embodiment of the present invention. The portable electronic device 200 has an electronic map 310 stored in a memory (not shown). When the portable electronic device 200 is moved horizontally, the display page of the display module 220 will be panned or scrolled as described in more detail below. The portable electronic device 200 is utilized to browse a road 311, a road 312 and a road 313 on the electronic map 310. Referring to Fig. 2 and Fig. 3A, the display module 220 presents a partial region on the electronic map 310. The portable electronic device 200 is moved along a first direction 250 horizontally, which causes the motion sensor 232 to generate a horizontal acceleration parameter of the portable electronic device 200. Subsequently, the processor 234 generates a horizontal velocity parameter and a horizontal displacement parameter of the portable electronic device 200 by processing the horizontal acceleration parameter and then the display page of the display module 220 is panned in the omni-directional and variable speed manner.

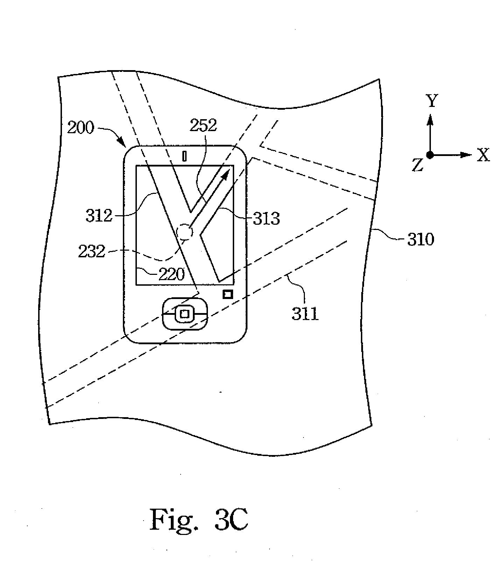

Referring to Fig. 3B, the display module 220 presents the region between the road 311 and the road 312 after the display page is panned along the first direction 250. Subsequently, users can move the portable electronic device 200 along a second direction 251 horizontally, thereby causing the display page of the display module 220 to be panned along the second direction 251. Similarly, referring to Fig. 3C, users can move the portable electronic device 200 along a third direction 252 horizontally to pan the display page along the third direction 252. As discussed above, the display controller 230 allows users to adjust the display page in an intuitive manner, which pans the display page according to the motion of the portable electronic device in the omni-directional and variable speed manner. Thus, users can browse the electronic map 310 just like that they are reading a paper map.

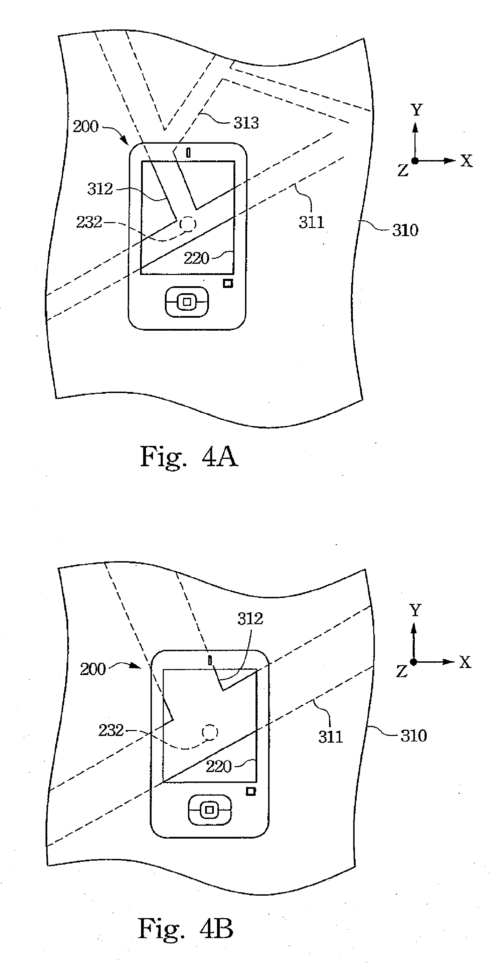

Fig. 4A to Fig. 4B illustrates display pages according to another preferred embodiment of the present invention. The portable electronic device 200 is moved vertically and the display page of the display module 220 is adjusted in a zooming manner. Referring to Fig. 2 and Fig. 4A, the display module 220 presents a partial region on the electronic map 310. The portable electronic device 200 is moved down along the Z direction vertically, which causes the motion sensor 232 to generate a Z-directional acceleration parameter of the portable electronic device 200. Subsequently, the processor 234 generates a Z-directional velocity parameter and a Z-directional displacement parameter of the portable electronic device 200 by processing the Z-directional acceleration parameter. Then, the display page of the display module 220 is enlarged according to the Z-directional velocity parameter and the Z-directional displacement parameter. Referring to Fig. 4B, the display page of the display module 220 is enlarged, which makes the partial region on the electronic map 310 bigger and clearer. On the contrary, the display page of the display module 220 can be shrunk when the portable electronic device 200 is moved up along the Z direction vertically. In brief, the display page of the display module 220 can be enlarged or shrunk in the variable speed manner so that users can browse the electronic map 310 just like that they are reading a paper map.

It is worth noting that the display controller of the present invention can be applied to PDAs, cellular phones, digital cameras and portable computers. The present invention can be utilized to view not only electronic maps but also image files, web pages and other computer documents in the omni-directional and variable speed manner.

The display controller of the present invention has a motion sensor, such as a 3-axle accelerometer, to generate at least one acceleration parameter of a portable electronic device. The display controller of the present invention also uses a processor to generate a velocity parameter and a displacement parameter of the electronic device. Moreover, the display controller of the present invention can adjust the display page of the portable electronic device in omni-directional and variable speed manner, thus providing users to adjust the display page in an intuitive manner.

While the invention has been described by way of example and in terms of the preferred embodiments, it is to be understood that the invention is not limited to the disclosed embodiments. To the contrary, it is intended to cover various modifications and similar arrangements as would be apparent to those skilled in the art. Therefore, the scope of the appended claims should be accorded the broadest interpretation so as to encompass all such modifications and similar arrangements.

## Claims

1. An intuitive display controller on a portable electronic device comprising:
a motion sensor for detecting at least one acceleration parameter of the electronic device; and
a processor coupled with the motion sensor, wherein the processor generates at least one displacement parameter of the portable electronic device by processing the acceleration parameter and adjusts a display page of the portable electronic device according to the displacement parameter.

2. An intuitive display controller in accordance with claim 1, wherein the motion sensor is a 3-axle accelerometer.

3. An intuitive display controller in accordance with claim 1, wherein the acceleration parameter is sum of an X-directional acceleration parameter and a Y-directional acceleration parameter, wherein the display page is adjusted in an omni-directional manner.

4. An intuitive display controller in accordance with claim 1, wherein the acceleration parameter is a Z-directional acceleration parameter and the display page is adjusted in a zooming manner.

5. A portable electronic device comprising:
a body;
a display module disposed on the body; and
a display controller disposed on the body, the display controller comprising:
a motion sensor for detecting at least one acceleration parameter of the electronic device; and
a processor coupled with the motion sensor, wherein the processor generates at least one displacement parameter of the portable electronic device by processing the acceleration parameter and adjusts a display page of the portable electronic device according to the displacement parameter.

6. A portable electronic device in accordance with claim 5, wherein the motion sensor is a 3-axle accelerometer.

7. A portable electronic device in accordance with claim 5, wherein the acceleration parameter is sum of an X-directional acceleration parameter and a Y-directional acceleration parameter, wherein the display page is adjusted in an omni-directional manner.

8. A portable electronic device in accordance with claim 5, wherein the acceleration parameter is a Z-directional acceleration parameter and the display page is adjusted in a zooming manner.

9. A display control method of a portable electronic device comprising:
detecting at least one acceleration parameter of the portable electronic device with a motion sensor;
generating at least one displacement parameter of the portable electronic device by processing the acceleration parameter; and
adjusting a display page of the portable electronic device according to the displacement parameter.

10. A display control method of a portable electronic device in accordance with claim 9, further comprising a step of generating at least one velocity parameter by processing the acceleration parameter and adjusting the display page in a variable speed manner according to the velocity parameter.

11. A display control method of a portable electronic device in accordance with claim 9, wherein the motion sensor is a 3-axle accelerometer

12. A display control method of a portable electronic device in accordance with claim 9, wherein the acceleration parameter is sum of an X-directional acceleration parameter and a Y-directional acceleration parameter, wherein the display page is adjusted in an omni-directional manner.

13. A display control method of a portable electronic device in accordance with claim 9, wherein the acceleration parameter is a Z-directional acceleration parameter and the display page is adjusted in a zooming manner.
